# EUROPEAN PATENT SPECIFICATION

(11) **EP 1 504 323 B1**
(45) Date of publication and mention of the grant of the patent: **16.12.2009**
(21) Application number: 03753071.4
(22) Date of filing: 14.05.2003
(51) Int. Cl.: G06F 1/00, H04L 29/06, H04L 12/26

(54) **METHOD AND SYSTEM FOR ANALYZING AND ADDRESSING ALARMS FROM NETWORK INTRUSTION DETECTION SYSTEMS**
VERFAHREN UND SYSTEM ZUM ANALYSIEREN UND ADRESSIEREN VON ALARMEN AUS NETZWERKEINDRINGDETEKTIONSSYSTEMEN
PROCEDE ET SYSTEME POUR ANALYSER ET SOLLICITER DES ALARMES A PARTIR DE SYSTEMES DE DETECTION DES INTRUSIONS DANS LES RESEAUX

(30) Priority: 14.05.2002 US 319242 P
(43) Date of publication of application: 09.02.2005
(73) Proprietor: Cisco Technology, Inc., San Jose, CA 95134-1706 (US)
(72) Inventor: ROWLAND, Craig, H., Austin, TX 78750-8213 (US); COHEN, Nathan, M., Austin, TX 78757-1834 (US); SHANKLIN, Steven, D., Austin, TX 78739-1719 (US); SNAPP, Steven, R., Cedar Park, TX 78613-1822 (US); CAMPOS, Stephen, B., Austin, TX 78717 (US); BURKE, Steven A., Austin, TX 78703-1724 (US)
(74) Representative: Kazi, Ilya
(86) International application number: PCT/US2003/015546
(87) International publication number: WO 2003/098413

(56) References cited:
- WO-A-00/54458
- WO-A-00/70464
- WO-A-99/57625
- WO-A1-03/084181
- WO-A2-01/84270
- US-A- 6 070 244
- US-A1- 2002 052 876
- US-B1- 6 275 942

## Description

### TECHNICAL FIELD OF THE INVENTION

This invention relates generally to intrusion detection and more particularly to a method and system for analyzing and addressing alarms from network intrusion detection systems.

### BACKGROUND OF THE INVENTION

Network Intrusion Detection Systems ("NIDS") are typically designed to monitor network activity in real-time to spot suspicious or known malicious activity and to report these findings to the appropriate personnel. By keeping watch on all activity, NIDS have the potential to warn about computer intrusions relatively quickly and allow administrators time to protect or contain intrusions, or allow the NIDS to react and stop the attack automatically. In the security industry, a NIDS may either be a passive observer of the traffic or an active network component that reacts to block attacks in real-time.

Because many NIDS are passive observers of the network traffic, they often lack certain knowledge of the attacking and defending host that makes it impossible to determine if an attack is successful or unsuccessful. Much like an eavesdropper overhearing a conversation between two strangers, NIDS very often lack knowledge of the context of the attack and, therefore, "alarm" on network activity that may not be hostile or relevant.

Some systems attempt to address this problem by building a static map of the network they are monitoring. This knowledge is usually built by scanning all the systems on the network and saving the result to a database for later retrieval. This system is inadequate for most networks because the topology, types, and locations of network devices constantly change and requires the administrator to maintain a static database. Additionally, the stress of constantly scanning and keeping the network databases up to date is very intensive and may often slow down or cause network services to stop functioning. Previous efforts to detect unauthorised intrusions can be found in WO 99/57625.

### SUMMARY OF THE INVENTION

Aspects of the invention are set out in the independent claims and preferred features of the aspects are set out in the dependent claims.

According to one embodiment of the invention, a method for analyzing and addressing alarms from network intrusion detection systems includes receiving from network intrusion detection systems an alarm at an analysis tool located outside a protected network, the alarm indicating an attack on a target host may have occurred, automatically accessing the target host in response to the alarm without using a remote agent, and automatically identifying the presence of the attack on the target host.

Some embodiments of the invention provide numerous technical advantages. Other embodiments may realize some, none, or all of these advantages. For example, according to one embodiment, the false alarm rate of network intrusion detection systems ("NIDS") is substantially reduced or eliminated, which leads to a lower requirement of personnel monitoring of NIDS to respond to every alarm. A lower false alarm rate is facilitated even though knowledge of the entire protected network is not required. Because knowledge of the network is not required, hosts may be dynamically added to the network.

According to another embodiment, critical attacks on a network are escalated and costly intrusions are remediated. By actively investigating an attack on the actual targeted host, computer forensic evidence is collected, automated recovery from network attacks may be accomplished via clean-up of compromised hosts. In addition, the ability to perform a random or schedule scan of target hosts for successful attacks enhances security by double-checking the already deployed security technologies.

Other advantages may be readily ascertainable by those skilled in the art from the following figures, description, and claims.

### BRIEF DESCRIPTION OF THE DRAWINGS

For a more complete understanding of the present invention and the advantages thereof, reference is now made to the following description taken in conjunction with the accompanying drawings, wherein like reference numbers represent like parts, and which:
FIGURE 1 is a schematic diagram illustrating a system for reducing the false alarm rate of network intrusion detection systems (NIDS) and for analyzing and addressing alarms from NIDS by utilizing a passive analysis tool and an active analysis tool according to one embodiment of the invention;
FIGURE 2 is a block diagram illustrating various functional components of the passive analysis tool of FIGURE 1 according to the one embodiment of the invention;
FIGURE 3 is a flowchart illustrating a method for reducing the false alarm rate of network intrusion detection systems according to one embodiment of the invention;
FIGURE 4 is a flowchart illustrating a method that may be used in conjunction with the method of FIGURE 3 according to one embodiment of the invention;
FIGURE 5 is a block diagram illustrating various functional components of the active analysis tool of FIGURE 1 according to the one embodiment of the invention; and
FIGURE 6 is a flowchart illustrating a method for analyzing and addressing alarms from network intrusion detection systems according to one embodiment of the invention.

### DETAILED DESCRIPTION OF EXAMPLE EMBODIMENTS OF THE INVENTION

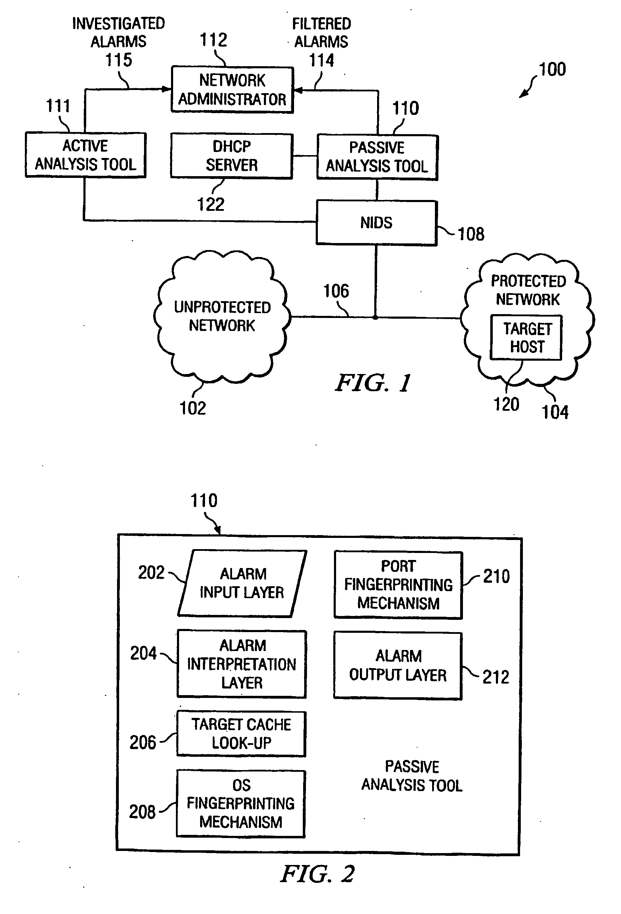

Embodiments of the invention are best understood by referring to FIGURES 1 through 6 of the drawings, like numerals being used for like and corresponding parts of the various drawings.

FIGURE 1 is a schematic diagram illustrating a system 100 for reducing the false alarm rate of a network intrusion detection system ("NIDS") 108 and for analyzing and addressing alarms from NIDS 108 by utilizing a passive analysis tool 110 and an active analysis tool 111 according to one embodiment of the present invention. In the illustrated embodiment, NIDS 108 is coupled to a link 106 that communicatively couples an unprotected network 102 with a protected network 104. System 100 also includes a network administrator 112 that utilizes passive analysis tool 110 and active analysis tool 111, as described in more detail below.

Unprotected network 102 may be any suitable network external to protected network 104. Examples of unprotected network 102 are the Internet, an Extranet, and a local area network. Protected network 104 may be any suitable network, such as a local area network, wide area network, virtual private network, or any other suitable network desired to be secure from unprotected network 102. Link 106 couples unprotected network 102 to protected network 104 and may be any suitable communications link or channel. In one embodiment, communications link 106 is operable to transmit data in "packets" between unprotected network 102 and protected network 104; however, communications link 106 may be operable to transmit data in other suitable forms.

In one embodiment, NIDS 108 is any suitable network-based intrusion detection system operable to analyze data packets transmitted over communications link 106 in order to detect any potential attacks on protected network 104. NIDS 108 may be any suitable combination of hardware, firmware, and/or software. Typically, NIDS 108 includes one or more sensors having the ability to monitor any suitable type of network having any suitable data link protocol. In a particular embodiment, the sensors associated with NIDS 108 are operable to examine data packets on an IP ("Internet Protocol") network using any suitable protocol, such as TCP ("Transmission Control Protocol"), UDP ("User Datagram Protocol"), and ICMP ("Internet Control Message Protocol"). Upon detection of a possible attack on protected network 104, NIDS 108 is operable to generate an alarm indicating that an attack on protected network 104 may have occurred and may block the attack outright. This alarm is then transmitted to passive analysis tool 110 for analysis as described below.

According to the teachings of one embodiment of the present invention, passive analysis tool 110 receives an alarm from NIDS 108 and, using the information associated with the alarm, determines if an attack is real or a false alarm. Passive analysis tool 110 significantly lowers the false alarm rate for network intrusion detection systems, such as NIDS 108, in the network environment and lowers the requirement of personnel, such as network administrator 112, monitoring these systems to respond to every alarm. Details of passive analysis tool 110 are described in greater detail below in conjunction with FIGURES 2 through 4. Although illustrated in FIGURE 1 as being separate from NIDS 108, passive analysis tool 110 may be integral with NIDS 108 such that separate hardware is not required. In any event, NIDS 108 and passive analysis tool 110 work in conjunction with one another to analyze, reduce, or escalate alarms depending on the detected severity and accuracy of the attack. One technical advantage is that some embodiments of the invention may eliminate alarms targeted at the wrong operating system, vendor, application, or network hardware.

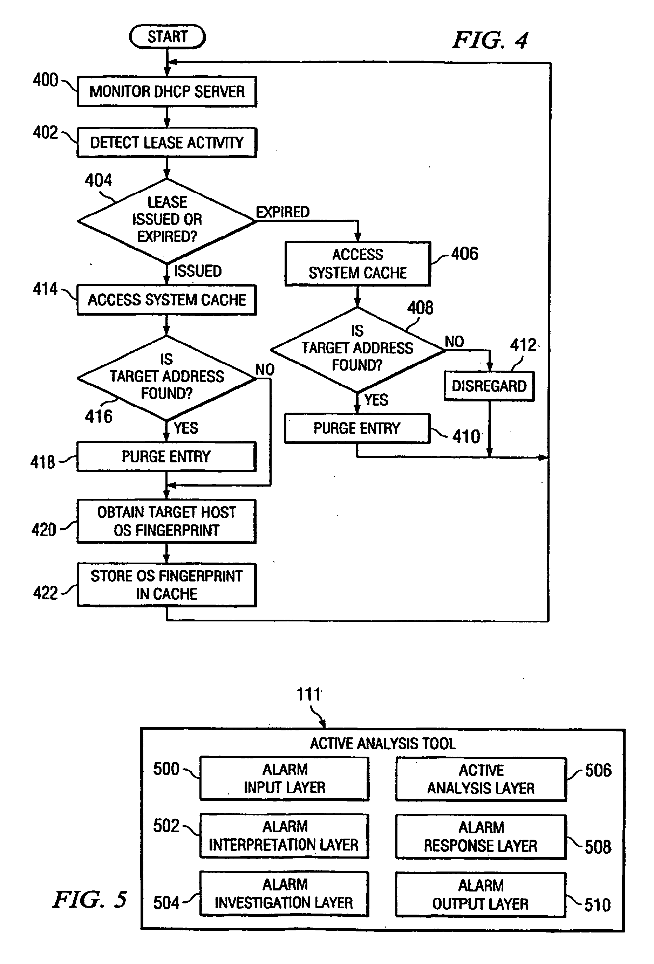

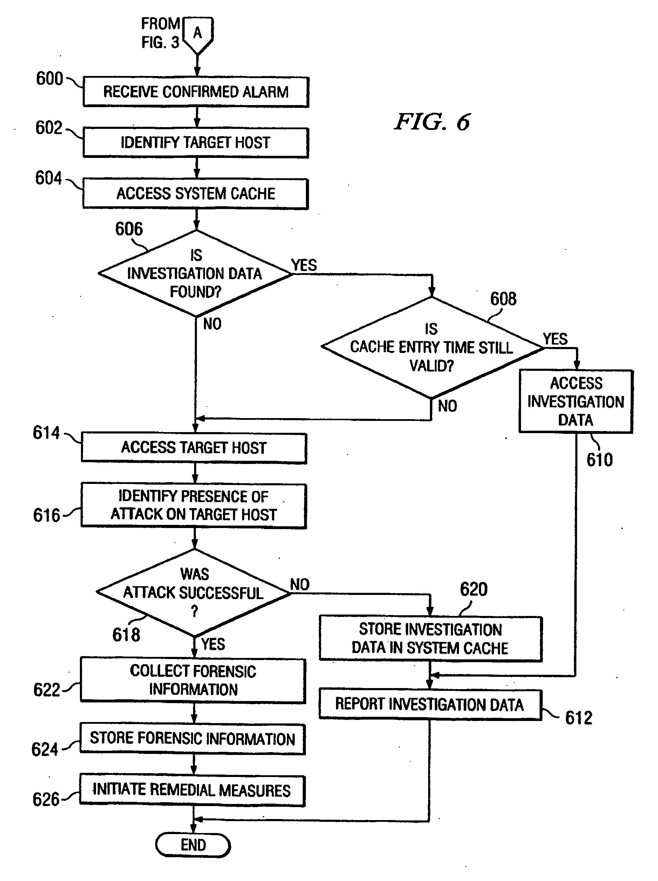

According to the teachings of another embodiment of the present invention, active analysis tool 111 receives a confirmed alarm from passive analysis tool 110 and automatically logs on to a target host 120 to investigate the detected attack and actively determine whether or not the attack was successful on target host 120. In addition, active analysis tool 111 may respond to the attacks by collecting relevant forensic evidence and initiating any suitable remedial measure. The process of actively investigating the attack on target host 120 assures a high degree of accuracy in a short response time. Forensic information may be copied from target host 120 to preserve its integrity against tampering, thereby allowing network administrator 112 or other suitable personnel to quickly analyze target host 120 and determine what changes were made after the attack happened and to use this information for later prosecution of the attacker. Details of active analysis tool 111 are described in greater detail below in conjunction with FIGURES 5 and 6. Although illustrated in FIGURE 1 as being separate from NIDS 108, active analysis tool 111 may be integral with NIDS 108 such that separate hardware is not required.

Network administrator 112 may be any suitable personnel that utilizes passive analysis tool 110 and active analysis tool 111 in order to monitor potential attacks on protected network 104 and respond thereto, if appropriate. Network administrator 112 typically has passive analysis tool 110 and active analysis tool 111 residing on his or her computer in order to receive filtered alarms from passive analysis tool, as denoted by reference numeral 114, and to receive information on investigated alarms, as denoted by reference numeral 115.

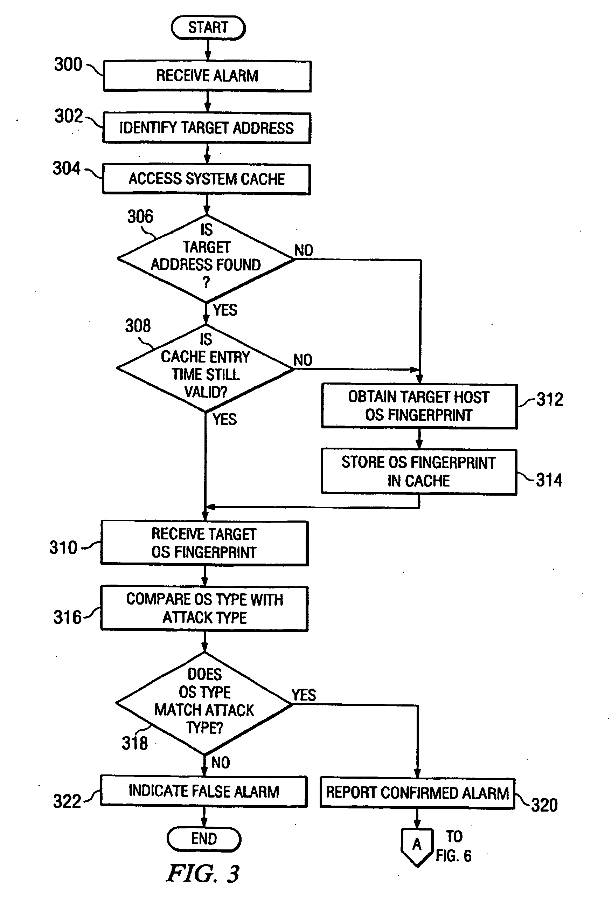

FIGURE 2 is a block diagram illustrating various functional components of passive analysis tool 110 in accordance with one embodiment of the present invention. The present invention contemplates more, less, or different components than those shown in FIGURE 2. These components may be pieces of software associated with passive analysis tool 110 that may be executed by a processor. In the illustrated embodiment, passive analysis tool 110 includes an alarm input layer 202, an alarm interpretation layer 204, a target cache look-up 206, an operating system ("OS") fingerprinting mechanism 208, a port fingerprinting mechanism 210 and an alarm output layer 212. The general functions of each of these components are now described before a more detailed description of some functions of passive analysis tool 110 is undertaken in conjunction with FIGURES 3 and 4.

Alarm input layer 202 is generally responsible for accepting the alarm from NIDS 108 and passing it to other system components for analysis. In one embodiment, alarm input layer 202 accepts the alarm from NIDS 108 and determines if the alarm format is valid. If the alarm format is invalid, then the alarm is disregarded. If the alarm format is valid, then the alarm is sent to alarm interpretation layer 204. Alarm input layer 202 is preferably designed to be NIDS vendor independent so that it may accept alarms from multiple NIDS sources concurrently with no modification.

Generally, alarm interpretation layer 204 receives the alarm from alarm input layer 202 and performs an analysis on the alarm. In one embodiment, alarm interpretation layer 204 determines whether the alarm is from a supported NIDS vendor. If the alarm is not from a supported NIDS vendor, an alert is generated and the alarm is disregarded. If the alarm is from a supported NIDS vendor, then alarm interpretation layer 204 is responsible for determining the NIDS vendor alarm type, relevant operating system type being attacked (e.g., Microsoft Windows, Sun Solaris, Linux, UNIX, etc.), the source address, target network address, the alarm severity, the alarm description, and any other suitable parameters associated with the alarm. Some of this information is used by passive analysis tool 110 to test if the alarm is real or false, as described in more detail below in conjunction with FIGURES 3 and 4.

Target cache look-up 206 indicates that a look-up is performed by passive analysis tool 110 in order to determine if the vulnerability of target host 120 has already been checked for the particular attack indicated by the alarm. The look-up may be performed in any suitable storage location, such as a local state table or database.

OS fingerprinting mechanism 208 performs a passive analysis of target host 120 to determine the operating system type of target host 120. Briefly, in one example, passive analysis tool 110 sends Internet Protocol ("IP") packets at target host 120 with special combinations of protocol flags, options, and other suitable information in the header in order to ascertain the operating system vendor and version number. Operating system fingerprinting is well known in the industry and, hence, is not described in detail herein. An advantage of this type of OS fingerprinting is that it requires no internal access to target host 120 other than remote network connectivity. OS fingerprinting mechanism 208 may build an operating system type within seconds of execution and stores this information in a suitable storage location for later retrieval and use.

Port fingerprinting mechanism 210 functions to identify a target port address stored in a suitable storage location when a host is added or deleted dynamically. Port fingerprinting mechanism 210 works in conjunction with OS fingerprinting mechanism 208 to determine, for example, if an attacked port on a particular target host is active or inactive. This allows passive analysis tool 110 to quickly determine an attack could work. For example, an attack against TCP port 80 on a particular target host may be proven to have failed by checking the target host to see if port 80 is active.

Alarm output layer 212 is responsible for taking the analyzed data from passive analysis tool 110 and either escalating or de-escalating the alarm. In other words, alarm output layer 212 functions to report a valid alarm; i.e., that a particular target host is vulnerable to an attack. A valid alarm may be reported in any suitable manner, such as through the use of a graphical user interface or a log file, storing in a database, or any other suitable output. As described in further detail below, a confirmed alarm may be utilized by active analysis tool 111 to determine whether an attack on the target host worked or failed.

Additional description of details of functions of passive analysis tool 110, according to one embodiment of the invention, are described below in conjunction with FIGURES 3 and 4.

FIGURE 3 is a flowchart illustrating an example method for reducing the false alarm rate of network intrusion detection systems according to one embodiment of the present invention. The example method begins at step 300 where an alarm is received from NIDS 108 by passive analysis tool 110. Passive analysis tool 110 identifies the target address from the alarm at step 302. Passive analysis tool 110 then accesses a system cache at step 304 in order to determine if the identified target host, such as target host 120, has already been checked for that particular attack type.

Accordingly, at decisional step 306, it is determined whether the target address has been found in the system cache. If the target address is found, then at decisional step 308, it is determined whether the cache entry time is still valid. In other words, if target host 120 was checked for a particular type of attack within a recent time period, then this information is stored temporarily in the system cache. Although any suitable time period may be used to store this information, in one embodiment, the information is stored for no more than one hour. If the cache entry time is still valid, then the method continues at step 310 where the OS fingerprint of target host 120 is received by passive analysis tool 110.

Referring back to decisional steps 306 and 308, if the target address is not found in the system cache or if the cache entry time is invalid for the target address that is found in the system cache, then the operating system fingerprint of target host 120 is obtained by passive analysis tool 110 using any suitable OS fingerprinting technique, as denoted by step 312. The operating system fingerprint is then stored in the system cache at step 314. The method then continues at step 310 where the operating system fingerprint of target host 120 is received.

The attack type and the operating system type of target host 120 are compared at step 316 by passive analysis tool 110. At decisional step 318, it is determined whether the operating system type of target host 120 matches the attack type. If there is a match, then a confirmed alarm is reported by step 320. If there is no match, then a false alarm is indicated, as denoted by step 322. For example, if the attack type is for a Windows system and the operating system fingerprint shows a Windows host, then the alarm is confirmed. However, if the attack type is for a Windows system and the operating system fingerprint shows a UNIX host, then this indicates a false alarm. This then ends the example method outlined in FIGURE 3.

Although the method outlined in FIGURE 3 is described with reference to passive analysis tool 110 comparing an operating system type with an attack type, other suitable characteristics of the operating system may be compared to relevant characteristics of the attack type in order to determine if the alarm is real or false.

Thus, in one embodiment, passive analysis tool 110 screens out potential false alarms while not requiring knowledge of the entire protected network 104. Alarm inputs are received from a deployed NIDS, such as NIDS 108, and analyzed to determine if an attack is real or a false alarm. This is accomplished even though agents are not required to be installed on each computing device of the protected network 104.

FIGURE 4 is a flowchart illustrating an example method that may be used in conjunction with the example method outlined in FIGURE 3 in accordance with an embodiment of the present invention. The example method outlined in FIGURE 4 addresses the dynamic addition of hosts to protected network 104 in order that prior knowledge of the network is not required. The example method in FIGURE 4 begins at step 400 where a dynamic host configuration protocol ("DHCP") server 122 (FIGURE 1) is monitored by passive analysis tool 110. The present invention contemplates any suitable dynamic configuration protocol server being monitored by passive analysis tool 110. At step 402, lease activity is detected by passive analysis tool 110. A "lease" as used herein means that a host has been given a network address for a given period of time. At decisional step 404 it is determined whether a lease issue is detected or a lease expire is detected.

If a lease expire is detected by passive analysis tool 110, then the system cache is accessed, as denoted by step 406. At decisional step 408, it is determined whether the target address associated with the lease expire is found in the system cache. If the target address is found in the system cache, then the entry is purged, at step 410, from the system cache. Passive analysis tool 110 then continues to monitor DHCP server 122. If a target address is not found in the system cache, then the lease expire is disregarded, as denoted by step 412. Passive analysis tool 110 continues to monitor DHCP server 122.

Referring back to decisional step 404, if a lease issue has been detected, then the system cache is accessed, as denoted by step 414. At decisional step 416, it is determined whether the target address associated with the lease issue is found in the system cache. If the target address is found, then the entry is purged, at step 418. If the target address is not found in the system cache, then the method continues at step 420, as described below.

At step 420, the operating system fingerprint of a target host is obtained at step 420. The operating system fingerprint is stored in the system cache, as denoted by step 422 for a particular time period. Passive analysis tool 110 then continues to monitor DHCP server 122.

The method outlined in FIGURE 4 saves considerable time and money and is more accurate than prior systems in which prior knowledge of the network is required. Passive analysis tool 110 may store entries for a user defined length of time that reduces the number of time operating system fingerprints need to be accomplished, which increases the efficiency of the network intrusion detection system. Another technical advantage is that resources are conserved and the impact on the protected network is low because target system profiles are built only when needed, effectively serving as a "just-in-time" vulnerability analysis.

FIGURE 5 is a block diagram illustrating various functional components of active analysis tool 111 in accordance with one embodiment of the present invention. The present invention contemplates more, less, or different components than those shown in FIGURE 5. These components may be pieces of software associated with active analysis tool 111 that may be executed by a processor. In the illustrated embodiment, active analysis tool 111 includes an alarm input layer 500, an alarm interpretation layer 502, an alarm investigation layer 504, an active analysis layer 506, an alarm response layer 508, and an alarm output layer 510. The general functions of each of these components are now described before a more detailed description of a function of active analysis tool 111 is undertaken in conjunction with FIGURE 6.

Alarm input layer 500 is generally responsible for accepting the alarm from NIDS 108 and passing it to other system components for analysis. In one embodiment, the functionality of alarm input layer 500 may be accomplished by alarm input layer 202 of passive analysis tool 110. In either case, alarm input layer 202 accepts the alarm from NIDS 108 and determines that the alarm format is valid. If the alarm format is invalid, then the alarm is disregarded. If the alarm format is valid, then the alarm is sent to alarm interpretation layer 502. Alarm input layer 500 is preferably designed to be NIDS vendor independent so that it may accept alarms from multiple NIDS sources concurrently with no modification.

Generally, alarm interpretation layer 502 receives the alarm from alarm input layer 500 and performs an analysis on the alarm. Again, in one embodiment, the functionality associated with alarm interpretation layer 502 may be accomplished by alarm interpretation layer 204 of passive analysis tool 110. In either case, alarm interpretation layer 502 determines whether the alarm is from a supported NIDS vendor. If the alarm is not from a supported NIDS vendor, an alert is generated and the alarm is disregarded. If the alarm is from a supported NIDS vendor, then alarm interpretation layer 502 is responsible for determining the NIDS vendor alarm type, relevant operating system type being attacked, the source address, the target network address, the alarm severity, the alarm description, and any other suitable parameters associated with the alarm. Some of this information is used by active analysis tool 111 in order to log onto target host 120 in addition to determine what pieces of information to analyze on target host 120. For example, an attack type commonly has files that are affected if it is a successful attack (i.e., web log files for web-based attacks). This is described in more detail below in conjunction with FIGURE 6.

Alarm investigation layer 504 indicates that a lookup is performed by active analysis tool 111 in order to determine if target host 120 has already been investigated for the particular attack indicated by the alarm within a particular time period. The lookup may be performed in any suitable storage location, such as a local state table or database.

Active analysis layer 506 performs an active analysis of target host 120 to determine whether or not the attack actually worked. Briefly, in one embodiment, active analysis tool 111 logs onto target host 120 by using an authenticated connection based on the operating system type of target host 120. The authenticated connection may take any suitable form; however, some examples are as follows: Microsoft SMB or CIFS protocol for Microsoft Windows systems, secure shell (SSH) encrypted login for UNIX systems, Telnet unencrypted login for UNIX systems, and user defined authentication methods. The use of native authentication means that no remote agent is needed on target host 120s of protected network 104. This makes deployment of active analysis tool 111 very fast and requires only that network administrator 112 provide top level login privileges and credentials to active analysis tool 111 instead of spending time deploying remote agents throughout protected network 104.

Active analysis layer 506, once logged on to target host 120, analyzes and collects information regarding the attack to determine whether or not the attack worked. For example, active analysis layer 506 may facilitate the analyzing of audit trails, system binaries, system directories, registry keys, configuration files, or other suitable analysis to determine whether or not the attack worked. The pieces of information on target host 120 that are analyzed are based upon the type of alarm detected. In one embodiment, it is a matter of mapping the detected type of attack to the relevant traces left by the attacker to determine if the attack worked. The determination of whether or not the attack worked is stored in a suitable storage location.

Alarm response layer 508 collects information on successfully executed attacks and determines what actions to take as a result of the successful attack. The actions may take any suitable form and may be configured by network administrator 112. For example, actions may include collecting logs, disabling users, blocking attacking hosts, disabling computer services, or any other suitable user defined action. Collecting information is copied from target host 120 and stored in a suitable storage location to preserve their integrity against tampering. Alarm response layer 508 may also initiate cleanup actions on target host 120 to remove the attacker and related exploited components. The information may also be used to build an attacker profile that can be taken and used to search other hosts on protected network 104 for possible compromise that use similar attack methods.

Alarm output layer 510, in one embodiment, is responsible for taking the information from the investigation of target host 120 and sending it to an output stream. The output stream may be any suitable output, such as a log file, a graphical user interface, a native NIDS device, a memory, or any other suitable user defined output.

Additional description of details of functions of active analysis tool 111, according to one embodiment of the invention, are described below in conjunction with FIGURE 6.

FIGURE 6 is a flowchart illustrating a method for analyzing and addressing alarms from network intrusion detection systems according to one embodiment of the present invention. The example method starts at step 600 where a confirmed alarm is received from passive analysis tool 110 or other suitable source. Active analysis tool 111 identifies target host 120 at step 602. Active analysis tool 111 then accesses a system cache at step 604 in order to determine if target host 120 has already been investigated for that particular attack type.

Accordingly, at decisional step 606, it is determined whether investigation data has been found for target host 120. If investigation data is found in the system cache, then, at decisional step 608, it is determined whether a cache entry time for the investigation data is still valid. In other words, if a particular target host was already investigated for the particular type of attack within a recent time period, then this investigation data is stored temporarily in the system cache. Although any suitable time period may be used, in one embodiment, the information is stored for no more than one hour. If a cache entry time is still valid, then the method continues at step 610 where the investigation data is accessed by active analysis tool 111. And at step 612, the investigation data is reported to network administrator 112 or other suitable personnel.

Referring back to decisional step 606, if the investigation data was not found in the system cache or if the cache entry time is invalid for a particular target host that is found in the system cache, then target host 120 is accessed, at step 614, by active analysis tool 111. The accessing of target host 120 is accomplished as described above in conjunction with active analysis layer 506 in FIGURE 5. Once target host 120 is accessed, the presence of the attack on target host 120 is identified at step 616. At decision step 618, it is determined whether the attack was successful. Determining whether or not the attack was successful is accomplished by active analysis layer 506 (FIGURE 5). As described above, a set of rules determines what steps should be taken on target host 120 to verify if the attack worked or failed based on the alarm type. This may include the analysis of audit trails, system binaries, system directories, registry keys, configuration files, or any other suitable user defined checks. It may also include checking for suspicious files, directories, users, processes, or other irregular activity. If it is determined at step 618 that the attack is not successful, the investigation data is stored in the system cache 620. The investigation data is then reported at step 612 to network administrator 112 or the suitable personnel.

If it is determined at step 618 that the attack is successful, then forensic information regarding the attack is collected at step 622 and stored at step 624. As described above, this forensic information may be copied from target host 120 to preserve its integrity against tampering to allow network administrator 112 or other suitable personnel to analyze target host 120 and determine what changes were made after the compromise happened and to use to collect information for later prosecution of the attacker. At step 626, remedial measures are initiated by active analysis tool 111. As described above, this may include collecting logs, disabling users, blocking an attacking host, disabling computer services, or any other suitable user defined action. This then ends the example method that is outlined in FIGURE 6.

Thus, in one embodiment, active analysis tool 111 investigates attacks on a target host in order to determine whether the attack worked or failed, collects forensic information regarding the attack, and potentially initiates remedial measures. This is done even though agents are not required to be installed on each computing device of protected network 104.

Although embodiments of the invention are described with some examples, various modifications may be suggested to one skilled in the art. The present invention intends to encompass those modifications as they fall within the scope of the claims.

## Claims

1. A method for analyzing and addressing alarms from network intrusion detection systems (108), comprising:
receiving from network intrusion detection systems an alarm at an analysis tool (110) located outside a protected network (104), the alarm indicating an attack on a target host inside the protected network (120) may have occurred;
automatically accessing the target host (120) in response to the alarm by logging on to the target host from outside the protected network using an authenticated connection based on an operating system type of the target host; and
automatically identifying the presence of the attack on the target host (120).

2. The method of Claim 1, further comprising:
automatically accessing a storage location in response to the alarm;
determining whether investigation data for the target host (120) already exists in the storage location;
if the investigation data exists and the investigation data is still valid, then accessing the investigation data; and
if the investigation data does not exist or if the investigation data exists but is invalid, then:
identifying whether the attack was successful; and
identifying an audit trail of the attack on the target host (120).

3. The method of Claim 1 or 2, further comprising automatically identifying whether the attack was successful.

4. The method of Claim 2 or 3, further comprising storing whether the attack was successful in storage location for a time period.

5. The method of Claim 3, wherein automatically identifying whether the attack was successful comprises automatically identifying an audit trail of the attack on the target host (120).

6. The method of any of Claims 2 to 5 wherein the audit trail is selected from the group consisting of a modification of one or more registry keys, an entry in an access log file, a modification of a configuration file, a modification of a system directory, a modification of a system binary, a suspicious system process, and a suspicious file.

7. The method of any of Claims 2 to 6, further comprising storing the audit trail in a, or the, storage location if the attack was successful.

8. The method of any of Claims 2 to 7, further comprising initiating a remedial measure if the attack was successful.

9. The method of Claim 8, wherein the remedial measure is selected from the group consisting of blocking an attacking host, disabling a target host (120), disabling a computer service, and alerting a network administrator (112).

10. The method of any preceding claim, further comprising receiving top level login privileges in order to access the target host (120).

11. The method of any preceding claim, further comprising:
before automatically accessing the target host (120), automatically accessing a storage location;
determining whether investigation data for the target host (120) already exists in the storage location; and
if the investigation data exists, then determining whether the investigation data is still valid; and
if the investigation data does not exist, then continuing with the automatically accessing step.

12. The method of any preceding claim, further comprising determining whether the target host (120) is vulnerable to the attack.

13. The method of Claim 12, wherein determining whether the target host (120) is vulnerable to the attack comprises:
identifying characteristics of the alarm, including at least an attack type and a target address of the target host (120);
querying the target host (120) for an operating system fingerprint;
receiving the operating system fingerprint that includes the operating system type from the target host (120);
comparing the attack type to the operating system type; and
indicating whether the target host (120) is vulnerable to the attack based on the comparison.

14. The method of any of Claims 2 to 13, further comprising:
after receiving the alarm, determining whether a format for the alarm is valid; and
if the format is not valid, then disregarding the alarm;
otherwise if the format is valid, then continuing the method with the automatically accessing step.

15. The method of any preceding claim comprising:
monitoring a dynamic configuration protocol server (122);
detecting that a lease issue has occurred for a new target host (120);
accessing the storage location;
determining whether an operating system fingerprint for the new target host (120) already exists in the storage location; and
if the operating system fingerprint for the new target host (120) does not exist; then:
querying the new target host (120) for the operating system fingerprint;
receiving the operating system fingerprint from the new target host (120); and
storing the operating system fingerprint of the new target host (120) in the storage location for a time period; and
if the operating system fingerprint for the new target host (120) does exist, then:
purging the existing operating system fingerprint for the new target host (120) from the storage location;
querying the new target host (120) for a new operating system fingerprint;
receiving the new operating system fingerprint from the new target host (120); and
storing the new operating system fingerprint of the new target host (120) in the storage location for a time period.

16. The method of any preceding claim, further comprising:
monitoring a dynamic configuration protocol server (122);
detecting that a lease expire has occurred for an existing target host (120); accessing the storage location;
determining whether an operating system fingerprint for the existing target host (120) already exists in the storage location; and
if the operating system fingerprint for the existing target host (120) does exist, then purging the existing operating system fingerprint for the existing target host (120) from the storage location.

17. A system for analyzing and addressing alarms from network intrusion detection systems (108), comprising:
means for receiving from network intrusion detection systems an alarm at an analysis tool located outside a protected network, the alarm indicating an attack on a target host inside the protected network (120) may have occurred;
means for automatically accessing the target host (120) in response to the alarm, the means for accessing comprising means for logging on to the target host from outside the protected network by using an authenticated connection based on an operating system type of the target host; and
means for automatically identifying the presence of the attack on the target host (120).

18. A system according to Claim 17, further comprising:
a network intrusion detection system (108) (NIDS) operable to transmit an alarm indicating an attack on a target host (120) may have occurred;
and wherein the means for receiving, means for accessing and means for identifying comprises a software program located outside a protected network (104) and embodied in a computer readable medium.

19. The system of Claim 17 or 18, further comprising means for automatically identifying whether the attack was successful.

20. The system of Claim 19, further comprising means for storing whether the attack was successful for a time period.

21. The system of Claim 19 or 20, wherein means for identifying whether the attach was successful comprises means for automatically identifying an audit trail of the attack on the target host (120).

22. The system of Claim 21, wherein the audit trail is selected from the group consisting of a modification of one or more registry keys, an entry in an access log file, a modification of a configuration file, a modification of a system directory, a modification of a system binary, a suspicious system process, and a suspicious file.

23. The system of Claim 21 or 22, further comprising means for storing the audit trail if the attack was successful.

24. The system of any of Claims 19 to 23, further comprising means for initiating a remedial measure if the attack was successful.

25. The system of Claim 24, wherein the remedial measure is selected from the group consisting of blocking an attacking host, disabling a target host (120), disabling a computer service, and alerting a network administrator (112).

26. The system of any of Claims 17 to 25, further comprising means for receiving top level login privileges in order to access the target host (120).

27. The system of any of Claims 17 to 26, further comprising:
means for automatically accessing a storage location before accessing the target host (120);
means for determining whether investigation data of the target host (120) already exists in the storage location; and
if the investigation data exists, then means for determining whether the investigation data is still valid.

## Patentansprüche

1. Verfahren zum Analysieren und Adressieren von Alarmen von Netzwerkeindringungs-Ermittlungssystemen (108), das umfasst:
Empfangen eines Alarms von Netzwerkeindringungs-Ermittlungssystemen an einem Analysetool (110), das sich außerhalb eines geschützten Netzwerks (104) befindet, wobei der Alarm angibt, dass ein Angriff auf einen Ziel-Host innerhalb des geschützten Netzwerks (120) erfolgt sein könnte;
automatisches Zugreifen auf den Ziel-Host (120) im Ansprechen auf den Alarm durch Einwählen bei dem Ziel-Host von außerhalb des geschützten Netzwerks mittels einer authentisierten Verbindung basierend auf einem Betriebssystemtyp des Ziel-Hosts; und
automatisches Identifizieren des Vorhandenseins des Angriffs auf den Ziel-Host (120).

2. Verfahren nach Anspruch 1, das des Weiteren umfasst:
automatisches Zugreifen auf eine Speicherstelle im Ansprechen auf den Alarm;
Ermitteln, ob an der Speicherstelle bereits Untersuchungsdaten für den Ziel-Host (120) existieren;
wenn Untersuchungsdaten existieren und die Untersuchungsdaten noch gültig sind, Zugreifen auf die Untersuchungsdaten; und
wenn keine Untersuchungsdaten existieren, oder wenn Untersuchungsdaten existieren, aber ungültig sind, dann:
Identifizieren, ob der Angriff erfolgreich war; und
Identifizieren eines Nachweises für den Angriff auf den Ziel-Host (120).

3. Verfahren nach Anspruch 1 oder 2, das des Weiteren das automatische Identifizieren umfasst, ob der Angriff erfolgreich war.

4. Verfahren nach Anspruch 2 oder 3, das des Weiteren das Speichern, ob der Angriff erfolgreich war, für einen Zeitraum an einer Speicherstelle umfasst.

5. Verfahren nach Anspruch 3, wobei das automatische Identifizieren, ob der Angriff erfolgreich war, das automatische Identifizieren eines Nachweises für den Angriff auf den Ziel-Host (120) umfasst.

6. Verfahren nach einem der Ansprüche 2 bis 5, wobei der Nachweis ausgewählt wird aus der Gruppe bestehend aus einer Veränderung eines oder mehrerer Registrierungsschlüssel, einem Eintrag in einer Zugriffs-Protokolldatei, einer Veränderung einer Konfigurationsdatei, einer Veränderung eines Systemverzeichnisses, einer Veränderung eines Binärsystems, einem verdächtigen Systemprozess, und einer verdächtigen Datei.

7. Verfahren nach einem der Ansprüche 2 bis 6, das des Weiteren das Speichern des Nachweises an einer, oder der, Speicherstelle umfasst, wenn der Angriff erfolgreich war.

8. Verfahren nach einem der Ansprüche 2 bis 7, das des Weiteren das Initiieren einer Abhilfemaßnahme umfasst, wenn der Angriff erfolgreich war.

9. Verfahren nach Anspruch 8, wobei die Abhilfemaßnahme ausgewählt wird aus der Gruppe bestehend aus Blockieren eines angreifenden Hosts, Deaktivieren eines Ziel-Hosts (120), Deaktivieren eines Computerdienstes, und Alarmieren eines Netzwerk Administrators (112).

10. Verfahren nach einem der vorhergehenden Ansprüche, das des Weiteren das Empfangen von Login-Rechten auf höchster Ebene umfasst, um auf den Ziel-Host (120) zuzugreifen.

11. Verfahren nach einem der vorhergehenden Ansprüche, das des Weiteren umfasst:
vor dem automatischen Zugreifen auf den Ziel-Host (120), automatisches Zugreifen auf eine Speicherstelle;
Ermitteln, ob bereits Untersuchungsdaten für den Ziel-Host (120) an der Speicherstelle existieren; und
wenn Untersuchungsdaten existieren, Ermitteln, ob die Untersuchungsdaten noch gültig sind; und
wenn keine Untersuchungsdaten existieren, Fortfahren mit dem Schritt des automatischen Zugriffs.

12. Verfahren nach einem der vorhergehenden Ansprüche, das des Weiteren das Ermitteln umfasst, ob der Ziel-Host (120) für den Angriff anfällig ist.

13. Verfahren nach Anspruch 12, wobei das Ermitteln, ob der Ziel-Host (120) für den Angriff anfällig ist, umfasst:
Identifizieren der Eigenschaften des Alarms, einschließlich wenigstens eines Angriffstyps und einer Zieladresse des Ziel-Hosts (120);
Abfragen des Ziel-Hosts (120) hinsichtlich eines Betriebssystem-Fingerabdrucks;
Empfangen des Betriebssystem-Fingerabdrucks, der den Betriebssystemtyp enthält, von dem Ziel-Host (120);
Vergleichen des Angriffstyps mit dem Betriebssystemtyp; und Angeben, ob der Ziel-Host (120) für den Angriff anfällig ist, basierend auf dem Vergleich.

14. Verfahren nach einem der Ansprüche 2 bis 13, das des Weiteren umfasst:
nach Empfangen des Alarms, Ermitteln, ob ein Format für den Alarm gültig ist; und
wenn das Format nicht gültig ist, Ignorieren des Alarms;
ansonsten, wenn das Format gültig ist, Fortsetzen des Verfahrens mit dem Schritt des automatischen Zugriffs.

15. Verfahren nach einem der vorhergehenden Ansprüche, das umfasst:
Überwachen eines dynamischen Konfigurationsprotokoll-Servers (122);
Ermitteln, dass ein Lease-Problem für einen neuen Ziel-Host (120) aufgetreten ist;
Zugreifen auf die Speicherstelle;
Ermitteln, ob ein Betriebssystem-Fingerabdruck für den neuen Ziel-Host (120) bereits an der Speicherstelle existiert; und
wenn kein Betriebssystem-Fingerabdruck für den neuen Ziel-Host (120) existiert, dann:
Abfragen des neuen Ziel-Hosts (120) hinsichtlich des Betriebssystem-Fingerabdrucks;
Empfangen des Betriebssystem-Fingerabdrucks von dem neuen Ziel-Host (120); und
Speichern des Betriebssystem-Fingerabdrucks des neuen Ziel-Hosts (120) für einen Zeitraum an der Speicherstelle; und
wenn der Betriebssystem-Fingerabdruck für den neuen Ziel-Host (120) existiert, dann:
Löschen des existierenden Betriebssystem-Fingerabdrucks für den neuen Ziel-Host (120) von der Speicherstelle;
Abfragen des neuen Ziel-Hosts (120) hinsichtlich eines neuen Betriebssystem-Fingerabdrucks;
Empfangen des neuen Betriebssystem-Fingerabdrucks von dem neuen Ziel-Host (120); und
Speichern des neuen Betriebssystem-Fingerabdrucks des neuen Ziel-Hosts (120) für einen Zeitraum an der Speicherstelle.

16. Verfahren nach einem der vorhergehenden Ansprüche, das des Weiteren umfasst:
Überwachen eines dynamischen Konfigurationsprotokoll-Servers (122);
Ermitteln, dass für einen existierenden Ziel-Host (122) ein Lease abgelaufen ist;
Zugreifen auf die Speicherstelle;
Ermitteln, ob ein Betriebssystem-Fingerabdruck für den existierenden Ziel-Host (120) bereits an der Speicherstelle existiert; und
wenn der Betriebssystem-Fingerabdruck für den existierenden Ziel-Host (120) existiert, Löschen des existierenden Betriebssystem-Fingerabdrucks für den existierenden Ziel-Host (120) aus der Speicherstelle.

17. System zum Analysieren und Adressieren von Alarmen von Netzwerkeindringungs-Ermittlungssystemen (108), das aufweist:
eine Einrichtung zum Empfangen eines Alarms von Netzwerkeindringungs-Ermittlungssystemen an einem Analysetool, das sich außerhalb eines geschützten Netzwerks befindet, wobei der Alarm angibt, dass ein Angriff auf einen Ziel-Host innerhalb des geschützten Netzwerks (120) erfolgt sein könnte;
eine Einrichtung zum automatischen Zugreifen auf den Ziel-Host (120) im Ansprechen auf den Alarm, wobei die Einrichtung zum Zugreifen eine Einrichtung aufweist zum Einwählen bei dem Ziel-Host von außerhalb des geschützten Netzwerks mittels einer authentisierten Verbindung basierend auf einem Betriebssystemtyp des Ziel-Hosts; und
eine Einrichtung zum automatischen Identifizieren des Vorhandenseins des Angriffs auf den Ziel-Host (120).

18. System nach Anspruch 17, das des Weiteren aufweist:
ein Netzwerkeindringungs-Ermittlungssystem (108), das so betreibbar ist, dass es einen Alarm übermittelt, der angibt, dass ein Angriff auf einen Ziel-Host (120) stattgefunden haben könnte;
und wobei die Einrichtung zum Empfangen, die Einrichtung zum Zugreifen und die Einrichtung zum Identifizieren ein Softwareprogramm enthalten, das sich außerhalb eines geschützten Netzwerks (104) befindet und in einem computerlesbaren Medium enthalten ist.

19. System nach Anspruch 17 oder 18, das des Weiteren eine Einrichtung aufweist zum automatischen Identifizieren, ob der Angriff erfolgreich war.

20. System nach Anspruch 19, das des Weiteren eine Einrichtung aufweist zum Speichern für einen Zeitraum, ob der Angriff erfolgreich war.

21. System nach Anspruch 19 oder 20, wobei die Einrichtung zum Identifizieren, ob der Angriff erfolgreich war, eine Einrichtung aufweist zum automatischen Identifizieren eines Nachweises des Angriffs auf den Ziel-Host (120).

22. System nach Anspruch 21, wobei der Nachweis ausgewählt wird aus der Gruppe bestehend aus einer Veränderung eines oder mehrerer Registrierungsschlüssel, einem Eintrag in einer Zugriffs-Protokolldatei, einer Veränderung einer Konfigurationsdatei, einer Veränderung eines Systemverzeichnisses, einer Veränderung eines Binärsystems, einem verdächtigen Systemprozess, und einer verdächtigen Datei.

23. System nach Anspruch 21 oder 22, das des Weiteren eine Einrichtung aufweist zum Speichern des Nachweises, wenn der Angriff erfolgreich war.

24. System nach einem der Ansprüche 19 bis 23, das des Weiteren eine Einrichtung aufweist zum Initiieren einer Abhilfemaßnahme, wenn der Angriff erfolgreich war.

25. System nach Anspruch 24, wobei die Abhilfemaßnahme ausgewählt wird aus der Gruppe bestehend aus Blockieren eines angreifenden Hosts, Deaktivieren eines Ziel-Hosts (120), Deaktivieren eines Computerdienstes, und Alarmieren eines Netzwerk Administrators (112).

26. System nach einem der Ansprüche 17 bis 25, das des Weiteren eine Einrichtung aufweist zum Empfangen von Login-Rechten auf höchster Ebene, um auf den Ziel-Host (120) zuzugreifen.

27. System nach einem der Ansprüche 17 bis 26, das des Weiteren aufweist:
eine Einrichtung zum automatischen Zugreifen auf eine Speicherstelle vor dem Zugreifen auf den Ziel-Host (120);
eine Einrichtung zum Ermitteln, ob bereits Untersuchungsdaten für den Ziel-Host (120) an der Speicherstelle existieren; und
wenn Untersuchungsdaten existieren, eine Einrichtung zum Ermitteln, ob die Untersuchungsdaten noch gültig sind.

## Revendications

1. Procédé d'analyse et d'adressage d'alarmes provenant de systèmes de détection d'intrusion de réseau (108), comprenant :
la réception, à partir de systèmes de détection d'intrusion de réseau, d'une alarme au niveau d'un outil d'analyse (110) situé à l'extérieur d'un réseau protégé (104), l'alarme indiquant qu'une attaque sur un hôte cible à l'intérieur du réseau protégé (120) peut s'être produite ;
l'accession automatiquement à l'hôte cible (120) en réponse à l'alarme en ouvrant une session sur l'hôte cible depuis l'extérieur du réseau protégé au moyen d'une connexion authentifiée sur la base d'un type de système d'exploitation de l'hôte cible ; et
l'identification automatiquement de la présence de l'attaque sur l'hôte cible (120).

2. Procédé selon la revendication 1, comprenant en outre à :
l'accession automatiquement à un emplacement de mémorisation en réponse à l'alarme ;
la détermination si les données de recherche pour l'hôte cible (120) existent déjà dans l'emplacement de stockage ;
si les données de recherche existent et si les données de recherche sont encore valides, l'accession ensuite aux données de recherche ; et
si les données de recherche n'existent pas ou si les données de recherche existent mais sont invalides, alors :
l'identification si l'attaque a été réussie ; et
l'identification d'une piste de vérification de l'attaque sur l'hôte cible (120).

3. Procédé selon la revendication 1 ou 2, consistant en outre à identifier automatiquement si l'attaque a été réussie.

4. Procédé selon la revendication 2 ou 3, comprenant en outre la mémorisation du fait que l'attaque a été réussie dans l'emplacement de mémorisation pendant un certain temps.

5. Procédé selon la revendication 3, dans lequel l'identification automatique du fait que l'attaque a été réussie consiste à identifier automatiquement une piste de vérification de l'attaque sur l'hôte cible (120).

6. Procédé selon l'une quelconque des revendications 2 à 5, dans lequel la piste de vérification est choisie dans le groupe constitué d'une modification d'une ou plusieurs clés de registre, d'une entrée dans un fichier journal d'accès, d'une modification d'un fichier de configuration, d'une modification d'un répertoire de système, d'une modification d'un système binaire, d'un processus suspect du système et d'un fichier suspect.

7. Procédé selon l'une quelconque des revendications 2 à 6, comprenant en outre la mémorisation de la piste de vérification dans un emplacement ou dans l'emplacement de mémorisation si l'attaque a été réussie.

8. Procédé selon l'une quelconque des revendications 2 à 7, comprenant en outre le lancement d'une mesure corrective si l'attaque a été réussie.

9. Procédé selon la revendication 8, dans lequel la mesure corrective est choisie dans le groupe comprenant le blocage d'un hôte attaquant, la désactivation d'un hôte cible (120), la désactivation d'un service informatique et l'avertissement d'un administrateur de réseau (112).

10. Procédé selon l'une quelconque des revendications précédentes, comprenant en outre la réception des privilèges de connexion de haut niveau afin d'accéder à l'hôte cible (120).

11. Procédé selon l'une quelconque des revendications précédentes, comprenant en outre :
avant d'accéder automatiquement à l'hôte cible (120), l'accession automatiquement à un emplacement de mémorisation ;
la détermination si les données de recherche pour l'hôte cible (120) existent déjà dans l'emplacement de mémorisation ; et
si les données de recherche existent, la détermination ensuite si les données de recherche sont encore valides ; et
si les données de recherche n'existent pas, la poursuite alors par l'étape d'accès automatique.

12. Procédé selon l'une quelconque des revendications précédentes, comprenant en outre la détermination si l'hôte cible (120) est vulnérable à l'attaque.

13. Procédé selon la revendication 12, dans lequel le fait de déterminer si l'hôte cible (120) est vulnérable à l'attaque comprend :
l'identification des caractéristiques de l'alarme, comprenant au moins un type d'attaque et une adresse cible de l'hôte cible (120) ;
l'interrogation de l'hôte cible (120) pour une empreinte digitale de système d'exploitation ;
la réception de l'empreinte digitale de système d'exploitation qui comprend le type de système d'exploitation provenant de l'hôte cible (120) ;
la comparaison du type d'attaque au type de système d'exploitation ; et
l'indication si l'hôte cible (120) est vulnérable à l'attaque en se basant sur la comparaison.

14. Procédé selon l'une quelconque des revendications 2 à 13, comprenant en outre :
après avoir reçu l'alarme, la détermination si un format pour l'alarme est valide ; et
si le format n'est pas valide, l'ignorance alors de l'alarme ;
sinon, si le format est valide, la poursuite alors du procédé par l'étape d'accès automatique.

15. Procédé selon l'une quelconque des revendications précédentes comprenant:
la surveillance d'un serveur à protocole de configuration dynamique (122) ;
la détection qu'un problème de contrat s'est produit pour un nouvel hôte cible (120) ;
l'accession à l'emplacement de mémorisation ;
la détermination si une empreinte digitale du système d'exploitation pour le nouvel hôte cible (120) existe déjà dans l'emplacement de mémorisation ; et
si l'empreinte digitale du système d'exploitation pour le nouvel hôte cible (120) n'existe pas ; alors :
l'interrogation du nouvel hôte cible (120) pour l'empreinte digitale du système d'exploitation ;
la réception de l'empreinte digitale du système d'exploitation provenant du nouvel hôte cible (120) ; et
la mémorisation de l'empreinte digitale du système d'exploitation du nouvel hôte cible (120) dans l'emplacement de mémorisation pendant un certain temps ; et
si l'empreinte digitale du système d'exploitation pour le nouvel hôte cible (120) n'existe pas, alors :
la purge de l'empreinte digitale existante du système d'exploitation pour le nouvel hôte cible (120) de l'emplacement de mémorisation ;
l'interrogation du nouvel hôte cible (120) pour une nouvelle empreinte digitale du système d'exploitation ;
la réception de la nouvelle empreinte digitale du système d'exploitation provenant du nouvel hôte cible (120) ; et
la mémorisation de la nouvelle empreinte digitale du système d'exploitation du nouvel hôte cible (120) dans l'emplacement de mémorisation pendant un certain temps.

16. Procédé selon l'une quelconque des revendications précédentes, comprenant en outre :
la surveillance d'un serveur à protocole de configuration dynamique (122) ;
la détection qu'une expiration de contrat s'est produite pour un hôte cible existant (120) ; l'accession à l'emplacement de mémorisation ;
la détermination si une empreinte digitale du système d'exploitation pour l'hôte cible existant (120) existe déjà dans l'emplacement de mémorisation ; et
si l'empreinte digitale du système d'exploitation pour l'hôte cible existant (120) existe effectivement, la purge alors de l'empreinte digitale du système d'exploitation existante pour l'hôte cible existant (120) de l'emplacement de mémorisation.

17. Système d'analyse et d'adressage d'alarmes provenant de systèmes de détection d'intrusion de réseau (108), comprenant :
des moyens permettant de recevoir à partir de systèmes de détection d'intrusion de réseau, une alarme au niveau d'un outil d'analyse situé à l'extérieur d'un réseau protégé, l'alarme indiquant qu'une attaque sur un hôte cible à l'intérieur du réseau protégé (120) peut s'être produite ;
des moyens permettant d'accéder automatiquement à l'hôte cible (120) en réponse à l'alarme, les moyens d'accès comprenant des moyens permettant d'ouvrir une session sur l'hôte cible depuis l'extérieur du réseau protégé au moyen d'une connexion authentifiée sur la base d'un type de système d'exploitation de l'hôte cible ; et
des moyens permettant d'identifier automatiquement la présence de l'attaque sur l'hôte cible (120).

18. Système selon la revendication 17, comprenant en outre :
un système de détection d'intrusion de réseau (108) (NIDS) utilisable pour transmettre une alarme indiquant qu'une attaque sur un hôte cible (120) peut s'être produite ;
et dans lequel les moyens de réception, les moyens d'accès et les moyens d'identification comprennent un programme logiciel situé à l'extérieur d'un réseau protégé (104) et intégré dans un support lisible par ordinateur.

19. Système selon la revendication 17 ou 18, comprenant en outre des moyens permettant d'identifier automatiquement si l'attaque a été réussie.

20. Système selon la revendication 19, comprenant en outre des moyens permettant de mémoriser le fait que l'attaque a été fructueuse pendant un certain temps.

21. Système selon la revendication 19 ou 20, dans lequel les moyens permettant d'identifier si l'attaque a été fructueuse comprennent des moyens permettant d'identifier automatiquement une piste de vérification de l'attaque sur l'hôte cible (120).

22. Système selon la revendication 21, dans lequel la piste de vérification est choisie dans le groupe constitué d'une modification d'une ou plusieurs clés de registre, d'une entrée dans un fichier journal d'accès, d'une modification d'un fichier de configuration, d'une modification d'un répertoire de système, d'une modification d'un système binaire, d'un processus suspect du système et d'un fichier suspect.

23. Système selon la revendication 21 ou 22, comprenant en outre des moyens permettant de mémoriser la piste de vérification si l'attaque a été réussie.

24. Système selon l'une quelconque des revendications 19 à 23, comprenant en outre des moyens permettant de lancer une mesure corrective si l'attaque a été réussie.

25. Système selon la revendication 24, dans lequel la mesure corrective est choisie dans le groupe comprenant le blocage d'un hôte attaquant, la désactivation d'un hôte cible (120), la désactivation d'un service informatique et l'avertissement d'un administrateur de réseau (112).

26. Système selon l'une quelconque des revendications 17 à 25, comprenant en outre des moyens permettant de recevoir des privilèges de connexion de haut niveau afin d'accéder à l'hôte cible (120).

27. Système selon l'une quelconque des revendications 17 à 26, comprenant en outre :
des moyens permettant d'accéder automatiquement à un emplacement de mémorisation avant accès à l'hôte cible (120) ;
des moyens permettant de déterminer si les données de recherche de l'hôte cible (120) existent déjà dans l'emplacement de mémorisation ; et
si les données de recherche existent, des moyens permettant ensuite de déterminer si les données de recherche sont encore valides.
